# EUROPEAN PATENT APPLICATION

(11) **EP 1 134 436 A1**
(43) Date of publication of application: **19.09.2001**
(21) Application number: 01200598.9
(22) Date of filing: 20.02.2001
(51) Int. Cl.: F16B 13/14

(54) **Universal wall plug unit for hammer-driven and screwdriver-driven screws**

(30) Priority: 15.03.2000 NL 1014656
(71) Applicant: J.H. DE WIT EN ZONEN B.V., 5700 AB Helmond (NL)
(72) Inventor: Schumacher, Paulus Michael Johannes, 5141 DJ Waalwijk (NL); Thoolen, Wilhelm Franciscus, 6077 CG St. Odilienberg (NL)
(74) Representative: Jorritsma, Ruurd

(57) **Abstract**

A wall plug unit for hammer-driven and screwdriver-driven screws comprises a plastic plug (2) and a metal nail (1) provided with an asymmetric or barb-like screw thread (23) which allows the nail to be hammered into the plug, which plug has a collar (14) which is intended to bear against the outer edge around the hole (3) in which the unit can be accommodated, a spreading part (22), which comprises at least two segments (9) separated by slits (15), and a screw part (12), which collar and spreading part define a continuous bore (16) in which the nail can be accommodated by being screwed and/or hammered in. On that side of the collar which is remote from the spreading part a sleeve (11) for premounting the nail is provided.

## Description

The invention relates to a universal wall plug unit for hammer-driven and screwdriver-driven screws, comprising a plastic plug and a metal nail provided with an asymmetric or barb-like screw thread which allows the nail to be hammered into the plug, which plug has a collar which is intended to bear against the outer edge around the hole in which the unit can be accommodated, a spreading part, which comprises at least two segments separated by slits, and a screw part, which collar and spreading part define a continuous bore in which the nail can be accommodated by being screwed and/or hammered in.

A wall plug unit for hammer-driven and screwdriver-driven screws of this type is known from DE-U-8321395. This known wall plug unit for hammer-driven and screwdriver-driven screws can be used as a hammer-driven wall plug for hammering in the screw and thus attaching objects to a continuous, solid base such as stone or concrete. In addition, the wall plug unit for hammer-driven and screwdriver-driven screws can be used as a wall plug for screwdriver-driven screws, for attaching objects to panel material, such as plasterboard, or hollow bricks using screws.

The advantage of this combined function as a wall plug for both hammer-driven screws and screwdriver-driven screws is that the user does not have to take into account the differences in the base which he may encounter while mounting objects. It is often not known in advance whether the base consists of continuous, solid material or of panel material or of hollow material. Nevertheless, a single type of wall plug unit for hammer-driven and screwdriver-driven screws is sufficient irrespective of the base and of the type of component to be attached, such as thin board material made from plastics or steel (such as cable ducts or brackets) or thicker material (such as wooden boards).

The known wall plug unit for hammer-driven and screwdriver-driven screws comprises a loose plug and a loose nail with a sawtooth-like screw thread. When used as a wall plug unit for screwdriver-driven screws, the nail is screwed into the plug. In the vicinity of its end, this plug has radially projecting ribs, which prevent the plug from having to turn with the nail. Therefore, the plug must first be knocked in using a hammer, with the ribs being deformed in the process. Then, the nail can be used as a separate, detached element and can be screwed in tightly.

This known wall plug unit for hammer-driven and screwdriver-driven screws is suitable for what is known as penetration mounting. This technique involves drilling all the way through the object which is to be secured and the base in direct succession using the same drill.

The object and the base are held together after the hole has been drilled and then the plug is put in place directly. The collar of the plug comes to bear against the object which is to be secured. The underside of the collar has ribs, which have to ensure that the object is pressed securely onto the base when the plug is pressed down. This is important, since when the nail is subsequently introduced good contact between the object and the base must be ensured before the plug is expanded on account of the nail being hammered or screwed in.

The plug itself also has to be pressed as far as possible into the hole, in order to prevent play between the secured components.

The advantage of this process is that work can be carried out more quickly than using the method in which the holes in the part to be attached and the base are drilled separately.

Nevertheless, the known unit has the drawback that working with a separate plug and nail is laborious. First of all, the plug has to be installed, followed by the nail, which represents an inconvenient sequence of operations.

A further problem is that during penetration mounting the holes obtained are often larger than the drill diameter. The object to be attached and the base crumble, so that the known wall plug unit for hammer-driven and screwdriver-driven screws cannot gain sufficient grip and the plug begins to rotate when the screw is being screwed in or cannot expand sufficiently to become fixed.

It is an object of the invention to provide a wall plug unit for hammer-driven and screwdriver-driven screws which is universally usable, is suitable for penetration mounting and in which the plug and nail can be handled as a single unit. This object is achieved by the fact that a sleeve for premounting the nail is provided on that side of the collar which is remote from the spreading part.

The plug and the screw can now be arranged in the holes as a preassembled unit. The nail can then be hammered or screwed in immediately.

The sleeve may be relatively thin-walled, in such a manner that, once it has been widened outwards as a result of the nail being hammered or screwed in, it comes to bear flat against the collar.

In this context, a hammering securing means is provided at the level of the collar or the sleeve. This hammering securing means ensures that during the hammering the object which is to be attached is held pressed onto the base, thus ensuring secure attachment. This hammering securing means may be a narrowing in the bore.

In the wall plug unit for hammer-driven and screwdriver-driven screws according to the invention, the segments extend as far as the collar, and in at least one of the slits between the segments there is a resilient tongue provided with a projection which projects outwards with respect to the nominal diameter of the spreading part, in such a manner that when the plug is fitted into the hole the tongue is pressed inwards, thus reducing the cross-sectional dimensions of the bore. Preferably, at least two resilient tongues are provided.

The projections offer good protection against the plug turning with the nail when the latter is being screwed in, in particular even in the case of crumbled holes, as often occur during penetration mounting. The projections are situated directly beneath the head, with the result that they themselves can be well secured in relatively thin objects which are to be attached, such as steel plates. This is particularly important when mounting thin plates on a base which is likewise relatively thin or is hollow, in which case it is possible to prevent the plug from rotating as well by forming a block with respect to the object which is actually to be attached.

Furthermore, the segments of the spreading section may have protrusions which project with respect to the nominal diameter, in such a manner that when the plug is fitted into the hole the segments are pressed inwards, thus reducing the cross-sectional dimensions of the bore.

When it is being hammered in, but also when being screwed in, the screw presses the segments outwards against the wall of the hole, thus ensuring secure attachment.

A screw part is provided with a view to fixing the wall plug unit for hammer-driven and screwdriver-driven screws in a thin or hollow base. The nail pulls up the screw part and, in the process, also turns the segments into the form of a knot which becomes fixed behind the thin base or in the cavity of a hollow base.

The invention will now be described in more detail with reference to the exemplary embodiments illustrated in the figures, in which:

Fig. 1 shows a cross-sectional view of the universal wall plug unit for hammer-driven and screwdriver-driven screws according to the invention.

Fig. 2 shows the wall plug unit for hammer-driven and screwdriver-driven screws which has been rotated through 90° along its centre axis compared to the illustration shown in Fig. 1.

Fig. 3 shows the wall plug unit for hammer-driven and screwdriver-driven screws once it has been partially introduced into a hole in a solid wall.

Fig. 4 shows a partial view, rotated through 90° about the centre axis with respect to the illustration in Fig. 3.

Fig. 5 shows a cross-section on V-V in Fig. 1.

Fig. 6 shows an illustration on VI-VI from Fig. 3.

Fig. 7 shows the wall plug unit for hammer-driven and screwdriver-driven screws once it has been arranged in a solid base.

Fig. 8 shows the wall plug unit for hammer-driven and screwdriver-driven screws once it has been arranged in a hollow wall.

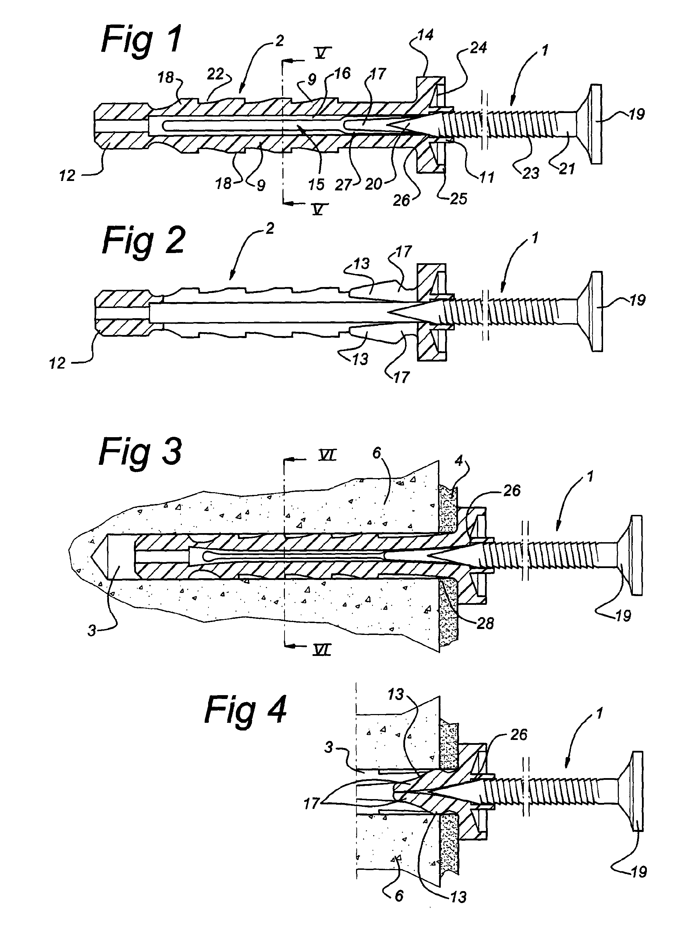

The wall plug unit for hammer-driven and screwdriver-driven screws according to the invention which is illustrated in Fig. 1 contains a nail 1 provided with a head 19, a shank 21 with a bevelled or barbed-like screw thread 23, and a point 20. Furthermore, the wall plug unit for hammer-driven and screwdriver-driven screws comprises a plastic plug 2, which has a collar 14, a spreading part 22 and a screw part 12. In this exemplary embodiment, the spreading part has two segments 9, separated by slits 15. The slits 15 extend from substantially the head 14 to close to the screw part 12. Each spreading part has protrusions 18 which run approximately half a circle around the circumference of the corresponding segment.

The diameter of the circles defined by the protrusions 18 is greater than the nominal diameter of the wall plug unit for hammer-driven and screwdriver-driven screws, which nominal diameter is equal to, inter alia, the diameter of the screw part 12.

The collar 14 of the wall plug unit for hammer-driven and screwdriver-driven screws has a conically running surface 24, the shape of which substantially corresponds to that of the underside of the head 19 of the nail 1. On the circumference, that conical surface is delimited by a raised ridge 25.

A continuous bore extends through the plug 2 and on one side opens out via the screw part 12 and on the other side via the collar 14. A sleeve 11 is provided at the opening of the bore 16 in the vicinity of the collar 14, in which sleeve, as shown in Figs. 1 and 2, the nail 1 is accommodated with a certain degree of clamping. The internal diameter of the sleeve 11 is slightly smaller than the maximum external diameter of the screw thread 23 on the shank 21. The diameter of the bore 16 is slightly smaller than the internal diameter of the sleeve 11, as shown by the shoulder 26 which represents the hammering securing means.

As shown in Figs. 1 and 2, a resilient tongue 17 is accommodated in each slit 15, and particularly in the widened part 27 thereof. These resilient tongues 17 are attached to the collar 14 and, on their surfaces which face away from one another bear a projection 13. The maximum distance between the external surfaces of these projections 13 is greater than the nominal diameter of the hole 3, 28.

It will be explained with reference to Fig. 3 how the wall plug unit for hammer-driven and screwdriver-driven screws according to the invention is used to fix a part, such as the plate 4, to a continuous or solid base 6, for example a concrete wall.

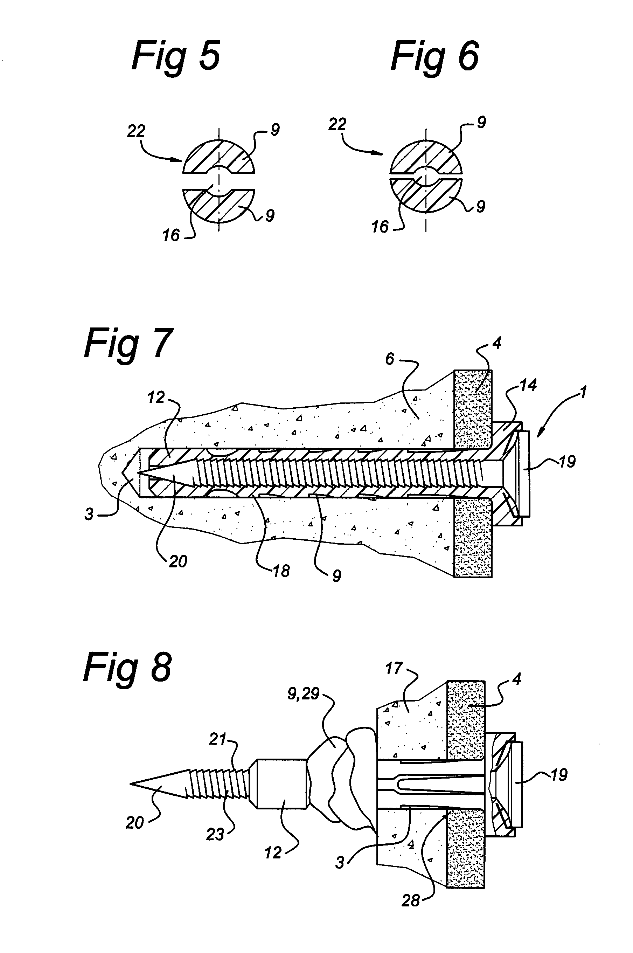

A hole 28 and 3 is drilled through the plate 4 and the base 6, respectively, and the plug 2 is placed into this hole. To do this, the head 19 of the nail 1 is struck by means of a hammer. Since the external diameter of the protrusions 18 is slightly greater than the nominal diameter of the holes 28, 3, the segments 9 are pressed inwards slightly, in such a manner that the diameter of the bore 16 decreases and the slits 15 become smaller. All this is also illustrated in Fig. 6, which shows the cross section through the spreading part 22 with the segments 9 in the installed position. The same spreading part 22 with segments in the free position can be seen in Fig. 5. In the fitted position, the bore 16 is considerably smaller than in the free position.

As shown in Fig. 3, the resilient tongues are also pressed inwards, since their projections 13 were at a greater distance from one another than the magnitude of the diameter of the hole 3, 28.

When the plug 1 is being knocked into the hole 3, 28, the nail 1 is initially prevented from entering the bore 16 on account of the presence of the hammering securing means 26. After the plug 1 has been knocked all the way into the hole 3, 28, the nail 1 can then be hammered into the plug 2. As a result of further hammer blows being applied to the nail 1, the latter is driven into the narrowed bore 16 until ultimately it reaches the position illustrated in Fig. 7. In the process, the segments 9 are pressed powerfully outwards, in such a manner that at any rate the protrusions 18 are pressed firmly against the interior wall of the hole 3. The point 20 of the nail 1 enters the screw part 12, which in turn is also widened slightly as a result.

During the final phase of hammering in the nail 1, its head 19 interacts with the sleeve 11, which is then spread outwards and pressed flat against the conical surface 24 of the collar 14. Partly because of the ridge 25, the sleeve 11 is thus concealed invisibly beneath the head 19 of the nail 1.

As an alternative, the wall plug unit for hammer-driven and screwdriver-driven screws according to the invention can also be used for a thin or hollow wall, as shown in Fig. 8. In that case, the nail 1, which has a slot or cross shape in the exterior surface of its head 19, is screwed into the plug 2 which has been fitted or hammered into the holes 28, 3. In the process, the resilient tongues 17 are spread apart, in such a manner that the projections are pressed securely against the wall. This may mean the wall of the hole 28 in the plate 4 or the wall of the hole 3 in the base 6, depending on the thickness of the plate 4.

After in this way the plug 2 has been securely prevented from turning, the nail 1 is screwed in, during which process the segments 9 may spread apart slightly. Ultimately, the shank 21, provided with screw thread 23, of the nail 1 reaches the screw part 12, which then, as screwing continues, is pulled towards the base 6/plate 4. In the process, the segments 9 are wound up into a knot shape, so that the plate 4 is securely locked to the base 6.

## Claims

1. Wall plug unit for hammer-driven and screwdriver-driven screws, comprising a plastic plug (2) and a metal nail (1) provided with an asymmetric or barb-like screw thread which allows the nail (1) to be hammered into the plug (2), which plug (2) has a collar (14) which is intended to bear against the outer edge around the hole (3) in which the unit can be accommodated, a spreading part, which comprises at least two segments (9) separated by slits (15), and a screw part (12), which collar (14) and spreading part define a continuous bore in which the nail (1) can be accommodated by being screwed and/or hammered in, **characterized in that** on that side of the collar (14) which is remote from the spreading part a sleeve (11) for premounting the nail (1) is provided.

2. Wall plug unit for hammer-driven and screwdriver-driven screws according to Claim 1, in which a hammering securing means (26) is provided at the level of the collar (14) or the sleeve (11).

3. Wall plug unit for hammer-driven and screwdriver-driven screws according to Claim 2, in which the hammering securing means (26) comprises a narrowing of the bore (16).

4. Wall plug unit for hammer-driven and screwdriver-driven screws according to one of the preceding claims, in which the segments (9) extend substantially as far as the collar (14).

5. Wall plug unit for hammer-driven and screwdriver-driven screws according to Claim 4, in which in at least one of the slits (15) between the segments (9) there is a resilient tongue (17) provided with a projection (13) which projects outwards with respect to the nominal diameter of the spreading part, in such a manner that when the plug (2) is fitted into the hole (3) the tongue (17) is pressed inwards, thus reducing the cross-sectional dimensions of the bore (16).

6. Wall plug unit for hammer-driven and screwdriver-driven screws according to Claim 5, in which at least two resilient tongues (17) are provided.

7. Wall plug unit for hammer-driven and screwdriver-driven screws according to one of the preceding claims, in which the segments (9) of the spreading section have protrusions (18) which project with respect to the nominal diameter, in such a manner that when the plug (2) is fitted into the hole (3) the segments (9) are pressed inwards, thus reducing the cross-sectional dimensions of the bore (16).

8. Wall plug unit for hammer-driven and screwdriver-driven screws according to one of the preceding claims, in which the bore (16) is continued by the screw part (12).

9. Wall plug unit for hammer-driven and screwdriver-driven screws according to one of the preceding claims, in which the external diameter of the screw part (12) is substantially equal to the nominal diameter of the hole (3, 28).

10. Wall plug unit for hammer-driven and screwdriver-driven screws according to one of the preceding claims, in which the internal diameter of the screw part (12) is substantially equal to the minor diameter of the screwthread (23) of the nail (1).

11. Wall plug unit for hammer-driven and screwdriver-driven screws according to one of the preceding claims, in which the sleeve (11) is relatively thin-walled, in such a manner that, once it has been widened outwards as a result of the nail (1) being hammered or screwed in, it comes to bear against the collar (14).

12. Wall plug unit for hammer-driven and screwdriver-driven screws according to Claim 10, in which outwardly facing surfaces of the collar (14) are conically shaped.
